Europäisches Patentamt

European Patent Office

Office européen des brevets

(11) Publication number: **0 047 346**
**B1**

## EUROPEAN PATENT SPECIFICATION

(45) Date of publication of patent specification: **15.03.89**

(21) Application number: **80303035.2**

(22) Date of filing: **01.09.80**

(51) Int. Cl.⁴: **B 01 D 53/34** // F23C6/04, F23G7/06

(54) **Disposal of oxides of nitrogen and heat recovery in a single self-contained structure.**

(43) Date of publication of application:
**17.03.82 Bulletin 82/11**

(45) Publication of the grant of the patent:
**15.03.89 Bulletin 89/11**

(84) Designated Contracting States:
**DE FR GB IT NL**

(56) References cited:
DE-A-2 348 909
GB-A-2 004 627
US-A-3 090 675
US-A-3 838 975
US-A-3 873 671
US-A-3 898 040
US-A-4 033 725
US-A-4 115 515

Patents Abstracts of Japan, vol. 1, no. 1, 1 March 1977, p. 58M76, & JP-A-51-111926

Patents Abstracts of Japan, vol. 1, no. 1, 1 March 1977, p. 58M76, & JP-A-51-111927

(73) Proprietor: **JOHN ZINK COMPANY**
**4401, South Peoria**
**Tulsa, Oklahoma 74103 (US)**

(72) Inventor: **Hart, Wallace F.**
**deceased (US)**
Inventor: **Watts, David O.**
**5506 East 62nd Street**
**Tulsa, Oklahoma (US)**
Inventor: **Reed, Robert D.**
**4192 South Troost Place**
**Tulsa, Oklahoma (US)**

(74) Representative: **Kerr, Simonne June et al**
**European Patent Attorney POTTS, KERR & CO.**
**P.O. Box 688**
**Ascot Berkshire SL5 8YT (GB)**

(56) References cited:
CZ-CHEMIE-TECHNIK, vol. 3, no. 1, 1974, G. KURZ: "Thermische und katalytische Reduktion der Stickoxide aus Abgasen der Industrie", pp. 23-24

Courier Press, Leamington Spa, England.

## Description

This invention lies in the field of NOx reduction. More particularly, it concerns a self-contained single structure in which gases which contain oxides of nitrogen (referred to herein as "NOx") are reduced by the burning of fuel under selected conditions, and including heat recovery means, all within the single enclosure.

In a prior art apparatus NOx gases are reduced in a somewhat similar chemical procedure but in entirely separate and isolated structures. Any heat recovery from such a structure has been in the form of a separate boiler structure for heat recovery. In view of the great interest at the present time in removal of nitrogen oxides from effluent gases, it is important to provide a simplified unitary structure of compact construction and efficient operation.

In the prior art adjacent arrangements of cooling and reoxidation sections are known such as US-A—4033725; US—A—3873671; Patent Abstract of Japan Vol. 1, No. 1, March 1977, page 58M76, 2nd & 3rd Abstract; and CZ-Chemie-Rechnik, Vol. 3, No. 1, 1974, page 23. Other references such as DE—A—2,348,909 and US-A—3 898 040 describe the disposition of heat exchangers coaxially about the combustion chamber wherein the combustion gas after leaving the chamber is diverted by an end wall reversing the direction of the gas into the heat exchanger. These latter structures however are absent arrangements to accept and remove objectionable and polluting NOx from gases containing same.

Advantages of this type of structure are multiple. First of all there is a reduction in cost due to elimination of outer walls of separate structures, and there is reduced volume which requires less floor space in the overall operation. Also, means are conveniently provided for recovering high temperature heat in the furnace section, as well as low temperature heat in the heat recovery section, with internal connections whenever possible.

An object of this invention is to provide a unitary compact structure in which fuel can be burned for the reduction of gases, and complete high-temperature and low-temperature heat recovery can be accomplished in the same structure.

According to the present invention an NOx disposal and heat recovery system comprises a burner and means to supply it with NOx gases to be reduced, gaseous fuel and primary air in a less than stoichiometric amount, a reducing section adjacent to the burner for combustion of the fuel in the NOx gases and primary air after they have flowed through the burner, a cooling section downstream of the reducing section in which the hot products of combustion leaving the reducing section may be mixed with cooled effluent gases introduced into the cooling section through cooled effluent gases injection means, secondary air injection means for injecting secondary air into the gases flowing out of the cooling section in an amount such that the total amount of primary and secondary air is equal to or greater than the stoichiometric amount required for the combustion of the fuel, a reoxidation section provided downstream of the secondary air injection means where the secondary air acts to complete combustion of the products of combustion leaving the cooling section, heat exchanging means for recovering heat from the gases flowing through the reducing section and from the effluent gases flowing out of the reoxidation section and exhaust means for evacuating the cooled effluent gases after they have passed the heat exchanging means.

The invention is characterised in that the cooling section is immediately adjacent the reducing section, the reoxidation section is of annular configuration and surrounds the centrally arranged cooling section and the upstream end of the reoxidation section is closed by an end wall spaced from the downstream end of the cooling section so that the gases therefrom are diverted into the annular reoxidation section, the cooled effluent gases injection means comprises a conduit extending along the axis of the cooling section and having openings therein through which said gases are injected, the secondary air injection means comprises a plurality of openings in said end wall and the heat exchanging means comprises at least one steam/water tube, is of annular configuration, surrounds the centrally arranged reducing section and is immediately adjacent the downstream end of the annular reoxidation section, so that the gases successively flow in a first direction from the burner through the centrally arranged reducing and cooling sections to the end wall, and thence in the opposite direction through the annular reoxidation section and heat exchange means to the exhaust means.

This type of construction reduces the overall length of the structure to approximately one half, with only a nominal increase in diameter, thereby providing for a more convenient shape and size for a combination NOx disposal and waste heat recovery system.

The invention will now be described further, by way of example, with reference to the accompanying drawings, in which:-

Fig. 1 is a block diagram of a prior art installation for the disposal of oxides of nitrogen and heat recovery and

Fig. 2 is a cross section through an apparatus constructed in accordance with the present invention.

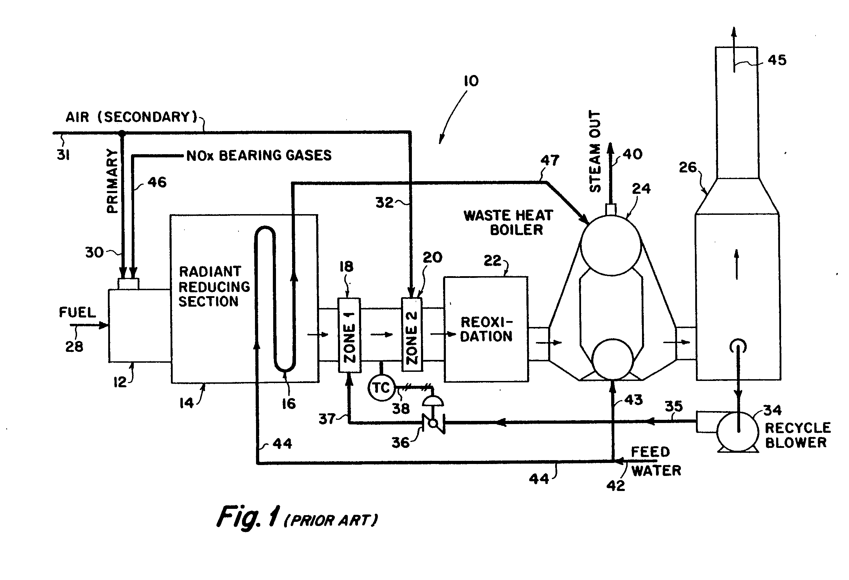

In Fig. 1 there is shown a conventional construction of a system for reduction of gases. These are in separate structures and include a separate waste-heat boiler and finally the stack.

The overall structure is indicated generally by the numeral 10. The burner is indicated generally by the numeral 12. The reducing section is indicated generally by the numeral 14, with the radiant heat recovery from the reducing section indicated generally by the numeral 16.

At the output of the reducing section, the hot gases are cooled in a first zone 18 by injection of cooled stack gases. Thereafter additional combustion air, namely secondary air, is injected to reoxidize in a reoxidation section for the purpose of completing the combustion of all combustible materials. The heat produced by combustion in the reoxidation section 22 is then recovered in a waste heat boiler indicated generally by the numeral 24, of conventional design Thereafter the cooled products of combustion go to a stack indicated generally by the numeral 26.

All of the various sections of the system are connected in series and the gas flow is in a single direction. At the start, fuel 28 is injected along with primary air 30 and bearing gases 46 to be reduced.

The amount of primary air is approximately 80% of the total air supply 31, so as to provide less-than-stoichiometric quantity of air. This provides a reducing atmosphere in section 14, and oxygen is given up by the nitrogen oxides for burning the fuel. In the presence of high temperature cases the nitrogen would tend to reoxidize but, in view of the lack of oxygen, there is no recombination and the hot gases are then cooled by the injection of cooled stack gases. This reduces the temperature of the combustion gases from a high temperature in the region of 649°C to a more moderate temperature of 1093°C. At the lower temperature there is only limited tendency for the nitrogen to reoxidize. The recycled stack gases are taken to a recycle blower 34 and by conduit 35 through a control valve 36 and line 37 are injected into the flow of hot gases from the reducing section 14. The rate of flow of cooling gases is controlled by the valve 36, which is under control of thermocouples 38 sensitive to the temperature of the cooled gases.

The secondary air is then introduced through conduit 32 at the second zone 20, and all of the remaining combustibles, such as carbon, carbon monoxide, hydrogen, formaldehyde, or others, that might be present, are burned in the reoxidation section 22. This again raises the temperature so that it becomes economical to recover the waste heat in the effluent gases. This is done by means of the waste heat boiler 24. Which produces steam output by line 40. Incidentally, feed water is supplied by line 42, and goes through line 44 to the radiant heat recovery in the reducing section, and the steam output goes by line 47 to the waste heat boiler 24. Feed water also goes by line 43 into the waste heat boiler. The outflow from the waste heat boiler is now in the neighborhood of 300° and passes up the stack 26 in accordance with arrow 45.

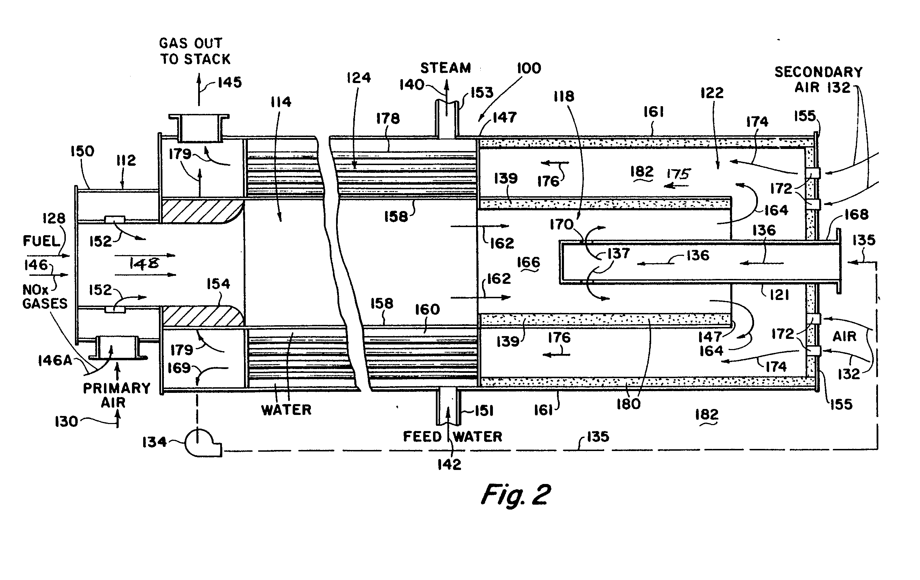

Referring now to Fig. 2, there is shown one embodiment of the invention, which is a system which operates substantially along the lines of the conventional system of Fig. 1 but on a more compact and efficient type of operation.

In Fig. 2 fuel 128 is introduced in a first direction (arrow 148). NOx gases are introduced in accordance with arrows 146 and/or 146A with the primary air, which is less-than-stoichiometric, being about 80% of the required air. Primary air flows in accordance with arrow 130 into the burner system and into the reducing section 114, in accordance with arrows 152. The fuel and air entry system is indicated generally by the numeral 112. This flows through a burner tile 154, into a reducing section 114. The wall 158 of the reducing section 114 is generally in a circular cylindrical form, and is a separating wall between the reducing section 114 and a fire tube boiler 124. The radiant heat from the flame in the reducing section 114 is transferred through the wall 158 to the water 160 and, thus, provides steam which flows through an outlet conduit 153 in accordance with the arrow 140. Feed water is brought in through an inlet 151 in accordance with arrow 142.

At the position 147, where the reducing section 114 terminates, the hot gases 162 flow into a furnace section chamber 166 thence to a cooling section 118. This is substantially the same diameter as that of the reducing section 114. However, it will have a wall 139 of heat resisting material 180, because, unlike wall 158, it is not in contact with cooling water.

There is an axial tubular conduit 121 through which cooled stack gases are flowed in accordance with arrows 135 and 136. These gases flow out through a series of circumferential ports 170 in the cylindrical wall 168 of the tube 121 in accordance with arrows 137 to mix with the hot gases 162, so that their temperature will be reduced to a selected value. The cooled gases 164 continue to flow in the annular zone between the axial tube 121 and the wall 139. There is a transverse end wall 155, which incidentally supports the axial tube 121. The wall 155 is spaced downstream from the end 147 of the wall 139 providing a region in which the flow of gases 164 can be reversed from a first direction of the fuel and air, to a reversed direction, 180° different.

Secondary air illustrated by arrows 132 is injected through ports 172 in the wall 155, in accordance with arrows 174, to mix with the cooled gases 164 so that they will continue to burn utilizing the remaining combustibles in the gases 164. This combustion takes place in the reoxidation section 122 in the annular space 182 between the wall 139 and the outer wall 161 of the reoxidiation section in a second direction 175.

Additional combustion takes place in the annular space 182 so that, by the time the gases reach the position 147 in accordance with arrows 176, all the combustion has been completed. The hot products of combustion then pass through fire tubes 178 in the heat recovery section 124, where they are cooled to a temperature in the region of 149°C. They flow in accordance with arrows 179 and 145 to a conventional stack for emission into the atmosphere.

As shown by arrow 169, part of the cooled combustion gases at the outlet of the fire tubes 178, are carried by dashed line to a recycle blower 134, and delivered in accordance with dashed line 135 to the arrows 135—136, to be injected into the cooling section 118 as previously mentioned.

While the system as shown in Fig. 2 has all of the apparatus shown in Fig. 1, there is a great saving in overall size since it is, in a sense, folded once so that the longitudinal dimension is reduced by about half. Furthermore, there are common walls between certain of the various sections so that, there is less cost and space required, while permitting the transfer of heat through one wall such as 158, as is desired.

## Claim

An NOx disposal and heat recovery system comprising

(a) a burner and means to supply it with NOx gases to be reduced, gaseous fuel and primary air in a less than stoichiometric amount;

(b) a reducing section (114) adjacent to the burner for combustion of the fuel in the NOx gases and primary air after they have flowed through the burner;

(c) a cooling section (118) downstream of the reducing section (114), in which the hot products of combustion leaving the reducing section (114) may be mixed with cooled effluent gases introduced into the cooling section through cooled effluent gases injection means (121);

(d) secondary air injection means (172) for injecting secondary air into the gases flowing out of the cooling section (118) in an amount such that the total amount of primary and secondary air is equal to or greater than the stoichiometric amount required for the combustion of the fuel;

(e) a reoxidation section (122) provided downstream of the secondary air injection means where the secondary air acts to complete combustion of the products of combustion leaving the cooling section (118);

(f) heat exchanging means (124) for recovering heat from the gases flowing through the reducing section (114) and from the effluent gases flowing out of the reoxidation section (122); and

(g) exhaust means for evacuating the cooled effluent gases after they have passed the heat exchanging means;

characterised in that:

(h) the cooling section (118) is immediately adjacent the reducing section (114);

(i) the reoxidation section (122) is of annular configuration and surrounds the centrally arranged cooling section (118), and the upstream end of the reoxidation section is closed by an end wall (155) spaced from the downstream end of the cooling section (118) so that the gases therefrom are diverted into the annular reoxidation section;

(j) the cooled effluent gases injection means comprises a conduit extending along the axis of the cooling section and having openings therein through which said gases are injected;

(k) the secondary air injection means comprises a plurality of openings (172) in said end wall (155); and

(l) the heat exchanging means (124) comprises at least one steam/water tube, is of annular configuration, surrounds the centrally arranged reducing section (114), and is immediately adjacent the downstream end of the annular reoxidation section (122);

so that the gases successively flow in a first direction from the burner through the centrally arranged reducing and cooling sections (114, 118) to the end wall (155), and thence in the opposite direction through the annular reoxidation section (122) and heat exchange means (124) to the exhaust means.

## Patentanspruch

System zur Beseitigung von Stickoxiden (NO$_x$) und zur Wärmerückgewinnung mit

a) einem Brenner und einer Einrichtung zur Versorgung mit zu reduzierenden NO$_x$-Gasen, gasförmigem Brennstoff und Primärluft in unterstöchiometrischem Anteil;

b) einem Reduzierbereich (114) neben dem Brenner zum Verbrennen des Brennstoffs in den NO$_x$-Gasen und Primärluft, nachdem diese durch den Brenner geströmt sind;

c) einem Kühlbereich (118) abströmseitig des Reduzierbereichs (114), in den die den letztgenannten Bereich verlassenden heißen Verbrennungsprodukte mit gekühlten ausströmenden Gasen bzw. Abgasen mischbar sind, welche durch eine Einlaßeinrichtung (121) für solche Gase bzw. Abgase in den Kühlbereich gelangen;

d) eine Sekundärluft-Einlaßeinrichtung (172) zum Injizieren von Sekundärluft in die aus dem Kühlbereich (118) ausströmenden Gase in solchem Ausmaß, daß der Gesamtanteil an Primär- und Sekundärluft gleich oder größer ist als der zum Verbrennen des Brennstoffs erforderliche stöchiometrische Anteil;

e) einen Re-Oxidierbereicht (122) abströmseitig der Sekundärluft-Einlaßeinrichtung, in dem die Sekundarluft die Verbrennung von den Kühlbereich (118) verlassenden Verbrennungsprodukten vervollständigt;

f) einen Wärmetauscher (124) zur Wiedergewinnung von Wärme aus den durch den Reduzierbereich (114) strömenden Gasen und aus den aus dem Re-oxidierbereich (122) ausströmenden Gasen bzw. Abgasen und

g) einen Auslaß zum Evakuieren der gekühlten Gase bzw. Abgase nach dem Passieren des Wärmetauschers;

dadurch gekennzeichnet, daß

h) sich der Kühlbereich (118) in unmittelbarer Nachbarschaft zum Reduzierbereich (114) befindet;

i) der Re-Oxidierbereich (122) eine ringförmige Konfiguration aufweist und den zentral angeordneten Kühlbereich (118) umgibt und das anströmende Ende bzw. die Eintrittsseite des Re-Oxidierbereichs durch eine Endwand (155) verschlossen ist, welche sich in solchem Abstand vom abströmenden Ende bzw. der Austrittsseite befindet, daß die Gase aus dem Kühlbereich in den ringförmigen Re-Oxidierbereich umlenkbar sind;

j) die Einlaßeinrichtung für die gekühlten Gase bzw. Abgase eine sich längs der Achse des Kühlbereichs erstreckende Leitung mit Öffnungen zum Durchtritt für die zu injizierenden Gase aufweist;

k) die Sekundärluft-Einlaßeinrichtung eine Mehrzahl von Öffnungen (172) in der Endwand (155) aufweist und

l) der Wärmetauscher (124) mindestens ein Dampf/Wasser-Rohr aufweist, eine ringförmige Konfiguration besitzt, den zentralen Reduzierbereich (114) umgibt und unmittelbar neben dem abströmenden Ende bzw. der Austrittsseite des ringförmigen Re-Oxidierbereichs (122) derart angeordnet ist, daß die Gase sukzessive vom Brenner in einer ersten Richtung durch die zentralen Reduzier-und kühlbereiche (114, 118) zur Endwand (155) und dann in umgekehrter Richtung durch die ringförmigen Bereiche des Re-Oxidierbereichs (122) und des Wärmetauschers (124) aum Auslaß strömem.

**Revendication**

Installation d'évacuation de NOx et de récupération de chaleur, comprenant:

a) un brûleur et des moyens pour lui envoyer des gaz NOx à réduire, un combustible gazeux et de l'air primaire dans une proportion inférieure à la proportion stoechiométrique;

b) une section de réduction (114) adjacente au brûleur pour la combustion du combustible dans les gaz NOx et l'air primaire après qu'ils aient traversé le brûleur;

c) une section de refroidissement (118) en aval de la section de réduction (114), dans laquelle les produits de combustion chauds quittant la section de réduction (114) peuvent être mélangés avec les gaz sortants refroidis introduits dans la section de refroidissement par l'intermédiaire de moyens d'injection de gaz sortants (121);

d) des moyens d'injection d'air secondaire (172) pour injecter de l'air secondaire dans les gaz sortant de la section de refroidissement (118) dans une proportion telle que la proportion totale d'air primaire et secondaire est égale ou supérieure à la proportion stoechiométrique requise pour la combustion du combustible;

e) une section de réoxydation (122) prévue en aval des moyens d'injection d'air secondaire ou l'air secondaire agit en achevant la combustion des produits de combustion quittant la section de refroidissement (118);

f) des moyens d'échange de chaleur (124) pour récupérer de la chaleur provenant des gaz traversant la section de réduction (114) et des gaz sortants qui sortent de la section de réoxydation (122); et

g) des moyens d'évacuation pour évacuer les gaz sortants refroidis après qu'ils aient franchi les moyens d'échange de chaleur;

caractérisé en ce que;

h) la section de refroidissement (118) est immédiatement adjacente à la section de réduction (114);

i) la section de réoxydation (122) à uno configuration annulaire et entoure la section de refroidissement (118) disposée centralement et l'extrémité amont de la section de réoxydation est fermée par une paroi terminale (155) écartée de l'extrémité aval de la section de refroidissement (118), de sorte que les gaz qui en émanent sont détournés dans la section de réoxydation annulaire;

j) les moyens d'injection des gaz sortants refroidis comprennent un conduit s'étendant suivant l'axe de la section de refroidissement et comportant doc ouvertures par lesquelles lesdits gaz sont injectés;

k) loc moyens d'injection d'air secondaire comprénnent une pluralité d'ouvertures (172) ménogéos dans ladite parol terminale (155); et

l) loc moyens d'échange de chaleur (124) comprennent au moins un tube vapeur/eau, ont une configuration annulaire, entourent la section de réduction disposée centralement (114) et cont immédiatement adjacentes à l'extrémité aval de la section de réoxydation annulaire (122);

de sorte que les gaz s'écoulent successivement dans une premiére direction du broleur à la parol terminale (155) à travers les sections de réduction et de refroidissement (114, 118) disposées centralement, et de cette paroi aux moyens d'évacuation, dans la direction opposée, a travers la section de réoxydation (122) et les moyens d'échange de chaleur (124).

Fig. 1 (PRIOR ART)

Fig. 2